# EUROPÄISCHE PATENTANMELDUNG

(11) **EP 0 600 263 A2**
(43) Veröffentlichungstag der Anmeldung: **08.06.1994**
(21) Anmeldenummer: 93118058.2
(22) Anmeldetag: 08.11.1993
(51) Int. Cl.: G05B 19/04, G05B 19/403

(54) **Elektronische Steuereinheit für Maschinen mit durch hochdynamisch arbeitende Stellglieder synchronisiert gesteuerten Bewegungsabläufen**

(30) Priorität: 16.11.1992 DE 4238600
(71) Anmelder: KÄNDLER MASCHINENBAU GmbH, D-09247 Kändler (DE)
(72) Erfinder: Barth, Johannes, Dr., D-09577 Niederwiesa (DE); Zeidler, Gert, D-09247 Röhrsdorf (DE); Leheis, Jörg, D-09112 Chemnitz (DE); Uhlig, Sieghardt, D-09240 Kemtau (DE); Görner, Mario, D-09127 Chemnitz (DE)
(74) Vertreter: Schneider, Manfred

(57) **Zusammenfassung**

Die Erfindung bezieht sich auf eine elektronische Steuereinheit für Maschinen mit durch hochdynamisch arbeitende Stellglieder (3) synchronisiert gesteuerten Bewegungsabläufen mehrerer unmittelbar zusammenwirkender Funktionselemente, bestehend aus einem Industrie-Personal-Computer (IPC,1) mit mindestens einer Ein- und Ausgabeeinheit (18) für serielle und parallele Datenströme, mit einem externen BUS (15) zur Verbindung des IPC mit den Stellgliedern (3), und aus mindestens zwei, Stellgliedern der Maschine zugeordneten Motor-Ansteuereinheiten(2), mit Befehlsspeichern, mit Sensoren an den von den Stellgliedern (3) bewegten Elementen, mit Mitteln (31) zur Rückmeldung von IST-Daten an den IPC, mit logischen Befehlsausgabeschaltungen und mit einem Leistungsteil.
Eine derartige Steuerung wird mit dem Ziel der Vergrößerung der Steuerleistung dadurch entscheidend verbessert, daß der IPC (1) als Leitsteuerrechner ausgebildet und programmierbar ist und daß die Motor-Ansteuereinheiten (2) als komplette Maschinensteuerrechner ausgestattet sind.

## Beschreibung

Die Erfindung bezieht sich auf eine elektronische Steuereinheit für Maschinen mit durch hochdynamisch arbeitende Stellglieder synchronisiert gesteuerten Bewegungsabläufen mehrerer unmittelbar zusammen wirkender Funktionselemente, bestehend aus einem Industrie-Personal-Computer (IPC) mit mindestens einer Ein- und Ausgabeeinheit für serielle und parallele Datenströme, mit einem externen BUS zur Verbindung des IPC mit den stellgliedern, und aus mindestens zwei, Stellgliedern der Maschine zugeordneten Motor-Ansteuereinheiten, mit Befehlsspeichern, mit Sensoren an den von den Stellgliedern bewegten Elementen, mit Mitteln zur Rückmeldung von IST-Daten an den IPC, mit logischen Befehlsausgabeschaltungen und mit einem Leistungsteil.

Durch die DE-OS 40 26 581 ist eine Steuerung dieser Art für eine Textilmaschine bekannt geworden, die eine Vielzahl von motorischen Einzelantrieben besitzt, denen einzeln oder gruppenweise Elektronikeinheiten zur Steuerung zugeordnet sind.
Ein übergeordneter BUS-Rechner, der den Gesamtprozeß der Arbeitsweise der Maschine überwacht, erhält von den Elektronikeinheiten Daten über die Arbeitsweise der einzelnen Motoren.
Die Daten der Ist-Werte und die Daten der Sollwerte werden in sogenannte Schieberegister eingelesen, durch den BUS-Rechner abgerufen, miteinander verglichen und das ermittelte Ergebnis, umgewandelt in ein Stellsignal, über einen BUS der Elektronikeinheit der Einzelmotoren wieder zugeleitet.

Die Programme und Betriebsdaten des BUS-Rechners werden einerseits durch einen zusätzlichen Leitrechner zur Betriebsdatenerfassung und andererseits durch eine separate Bedieneinheit vorgegeben bzw. korrigiert.

Der BUS-Rechner besitzt die Programme für die Steuerung und Regelung der Motoren und gibt auch, unabhängig von den BUS-Informationen, digitale oder binäre Informationen an andere, mit den Motoren funktionell zusammenwirkende Stellglieder ab.

Durch die an sehr vielen Maschinen erforderliche hohe Frequnz der pro Zeiteinheit bereitzustellenden, zu berechnenden und zu transportierenden Daten ist eine derartige Steuerung in ihren Einsatzgebieten erheblich begrenzt.

Die hohe Frequenz der Bereitstellung und des Transportes der Stellsignale ist neben der Anzahl der gleichzeitig zu steuernden Baugruppen, von der Form der zu realisierenden und zu synchronisierenden Bewegungsgesetze und von der Arbeitsfrequenz der einzelnen Arbeitsspiele der zu steuernden Baugruppen abhängig.

Die Gründe für das Nichtbeherrschen dieser Anforderungen liegen insbesondere darin, daß die Stellsignale, die der BUS-Rechner mit hoher Frequenz nacheinander aus den vorgegebenen IST- und SOLL-Werten für alle Motoren errechnet, über den BUS allen Elektronikeinheiten zugeleitet werden müssen.

Die Leistungsfähigkeit des BUS-Rechners und des BUSes ansich bestimmen demnach die Leistungsgrenze für das gesamte Steuersystem.

An Maschinen, die zur Steuerung und / oder Regelung sowie zur Synchronisierung vieler kompliziert zu steuernder Baugruppen eine hohe Frequenz der Ausgabe und des Transportes der Informations- und Stellsignale fordern, wird die Grenze, auch bei Verwendung sehr schneller Rechner und zusätzlicher Prozessoren, sehr schnell erreicht.

Die Anwendung von elektronisch gesteuerten, elektrischen Einzelantrieben für Baugruppen von komplizierten Maschinen bleibt daher oft Stückwerk. Das bedeutet, daß für eine große Zahl der synchronisiert anzutreibenden Baugruppen solcher Maschinen nach wie vor noch die Anwendung mechanisch synchronisierter Antriebe die einzige Lösungsvariante darstellt. Deren Nachteile sind bekannt:
- Sehr viele Teile unterschiedlicher Gestalt,
- ein hoher Energieaufwand für deren zyklische Bewegungen,
- hohe Aufwendungen für die Anpassung an, durch Größe und Design des Erzeugnisses bestimmte Koordinierung der Größe, Form, der Lage und des Zeitpunktes des Antriebes und v.a.m..

An Flachkulierwirkmaschinen z.B., wo eine relativ große Zahl von Fadenführersschienen, die Kulierkurven-schiene und auch eine große Zahl von Deckern mit ihren Schienen nach unterschiedlichsten Bewegungsgesetzen und mit ständig wechselnden, präzise definierten Hubgrößen gesteuert werden müssen, treten diese Nachteile in besonders deutlicher Weise auf.
Die Effekte, die mit bisher bekannten Steuerungen an diesen Maschinen erreicht werden, sind nach wie vor begrenzt.
Eine sehr große Zahl sehr unterschiedlicher Teile ist für diese Maschinen charakteristisch.

Die Anwendung und Anpassung dieser Maschinen an unterschiedliche Muster, Größen und Designs ist kompliziert und erfordert neben einem hohen Aufwand an lebendiger Arbeit auch ein hoch qualifiziertes Bedienpersonal.

An die Realisierung des elektrischen Antriebes von Barren für einzelne Arbeitselemente ist aus den genannten Gründen bisher nicht zu denken.

Auch der seit langem bekannte Versatzantrieb von Legeschienen an Kettenwirkmaschinen mit Hilfe von einzeln ansteuerbaren Schrittmotoren ist aus den genannten Gründen bisher nicht praktikabel.

Durch die DE-OS 24 26 057 und die US-PS 4 870 592 sind Zentralsteuerungen für eine Anzahl von entfernt angeordneten numerischen Steuerungen bekannt.
Bei derartigen Steuerungen (aus dem Werzeugmaschinenbau) überträgt der jeweilige Leitrechner (außerhalb der Maschine) Steuerprogramme an die numerischen Steuerungen (untergeordnete Maschinenrechner) verschiedener, zu einem Maschinensystem gehörender Werkzeugmaschinen und koordiniert das Abarbeiten der übertragenen Programme durch die Maschinenrechner und die Robotersteuerung.

Den numerischen Steuerungen, d.h. den Maschinenrechnern und Robotersteuerungen sind an den einzelnen Aggregaten der Maschine und der Roboter Einzelsteuerungen zugeordnet.
Diese Einzelsteuerungen besitzen im Allgemeinen Speicher für einzelne Befehle, die durch geeignete Schaltungen beim Erreichen bestimmter Programmpositionen zur Abarbeitung ausgelöst werden. (Vergl. Dubbel: Taschenbuch für den Maschinenbau - 17. Auflage T 36- T37).

Diese Einzelsteuerungen sind, bedingt durch die Notwendigkeit der zentralen Vorlage aller Daten für die Rechenoperationen, nicht in der Lage, selbsttätig komplexe Regelvorgänge auszuführen, umfangreiche Programmketten kontrolliert abzuarbeiten oder unmittelbar Informationen mit Einzelsteuerungen benachbarter Aggregate auszutauschen.
Alle Steuer-, Regel-, Synchronisations- und Kontrollfunktionen sind ebenso, wie sämtliche Rechenoperationen auch hier notwendigerweise im Maschinenrechner konzentriert.
Das bedeutet, daß, wie im eingangs geschilderten Fall, die gesamte Datenverarbeitung für alle Einzelsteuerungen - sowohl die Informationen über die IST-Werte an den Maschinenrechner, als auch die neu berechneten Stellinformationen vom Maschinenrechner an die in der Maschine verteilt angeordneten Stellglieder über den externen BUS geführt werden müssen.

Insbesondere dann, wenn es sich bei den Einzelsteuerungen um Motoren handelt, die präzis vorgegebene Bewegungsgesetze, unter den Bedingungen einer gegenseitigen Synchronisation mit anderen Motoren, steuern müssen, ist die Kapazität des Rechners und des externen BUSes schnell erreicht.
Der Einsatz einer ausreichenden Zahl derartiger Motor-Ansteuereinheiten ist damit pro Maschine nicht möglich. Der Effekt des Einsatzes elektronischer Steuerungen an derartigen komplizierten Maschinen bleibt begrenzt.

Durch die DE OS 28 16 434 ist eine andere Steuerung - eingesetzt an Nähmaschinen mit einer Positionsteuerung für das Nähgut - bekannt geworden.
Bei dieser Steuerung werden dem der Maschinensteuerung zugeordneten Rechner wahlweise ein oder mehrere weitere Rechner zugeordnet, die das Übertragen eines Programmes an die Steuereinrichtung oder dessen teilweise oder komplexe Veränderung ausführen kann.

Ein Rechner, der das Eingeben oder Ändern einzelner Bedienparameter an die Steuereinrichtung ermöglicht, kann dem Steuerrechner in Form eines Bedientableaus zugeordnet werden.

Derartige Rechnersysteme, die praktisch einander nebengeordnet sind, sind heute, bedingt durch die höhere Leistungsfähigkeit der einzelnen Rechner nicht mehr erforderlich.
Das eingangs gestellte Problem, sehr viele, sehr komplexe Steuerungen für mehrere Stellglieder mit hochdynamisch ablaufenden Bewegungsvorgängen synchronisiert und kontrolliert bei hohen Arbeitsgeschwindigkeiten zu steuern, ist auch mit dieser Lösung nicht realisierbar.

Unter dem Begriff "hochdynamisch ablaufender Bewegungsvorgänge" werden solche Bewegungskomplexe von Funktionelementen verstanden, die in Bruchteilen von Sekunden ein oder mehrere, nach komplizierten Bewegungsgesetzen ablaufende Bewegungen ausführen.
Diese Bewegungen wiederholen sich in der Regel zyklisch und können hinsichtlich ihrer Bewegungsbahn in einzelnen Zyklen oder in einer Gruppe von Zyklen voneinander abweichen.

Unter "gegenseitig synchronisierten Bewegungen" im Sinne dieser Erfindung verstehen wir, daß mehrere, der hochdynamisch ablaufenden Bewegungsvorgänge räumlich und zeitlich so aufeinander abgestimmt sind, daß sie gemeinsam, mit Hilfe ihrer Werkzeuge bestimmte Arbeitsverrichtungen, in der Regel am gleichen Werkstück ausführen.

Das Ziel der Erfindung besteht darin, auch Maschinen mit hochkomplizierten Bewegungsvorgängen, die sehr genau aufeinander abgestimmt sein müssen, durch die Anwendung elektronischer Steuerungen und präzise wirkender elektrischer Antriebe kostengünstiger herzustellen, mit weniger Energie zu betreiben und die Variabilität deren Arbeitsweise zu erhöhen.

Die Aufgabe der Erfindung besteht darin, das Steuerungssystem einer Maschine derart zu gestalten, daß die notwendigen Steuer- und Regelvorgänge und deren Synchronisation, bei Sicherung eines zeitlich und funktionell koordinierten Rahmenprogrammes, bei hoher Arbeitsfrequenz der Arbeitselemente und mit geringstem Koordinierungsaufwand hinsichtlich Datentransport und Datenverarbeitung, kostengünstig gewährleistet werden können.

Diese Aufgabe wird durch die im Anspruch 1 definierten Elemente der Steuerung gelöst.
Die Ausbildung der Motor-Ansteuereinheiten als komplette Maschinensteuerrechner und deren Unterordnung unter einen Leit-Steuerrechner, der an die Stelle des Maschinenrechners tritt, ermöglicht es, daß eine sehr große Zahl von Steueroperationen unmittelbar am Ort ihrer Ausführung gesteuert realisiert, kontrolliert und ggfs. korrigiert werden kann und daß die einzelnen Motor-Ansteuereinheiten unmittelbar und gezielt untereinander Befehle und Informationen zu Koordinierung ihrer Arbeitsweise austauschen können.
Es ist dabei zweckmäßig, wenn der Leit-Steuer-Rechner ein Rahmensteuerprogramm mit einer von ihm festgelegten Geschwindigkeit vorgibt und alle Motor-Ansteuereinheiten ihre Programme auf dieses Rahmensteuerprogramm ausrichten.

Der Leit-Steuerrechner, auch zentraler IPC genannt, kann neben der Koordinierung des Rahmensteuerprogrammes die Ausführung bestimmter Teilprogramme unter dem Gesichtspunkt bestimmter Muster- und Steuervorgänge koordinieren und die einzelnen Motor-Ansteuereinheiten ständig oder zeitweilig mit bestimmten Steuerprogrammen versorgen.

Die Motor-Ansteuereinheiten führen komplizierte Programme selbsttätig aus, übernehmen Regelfunktionen und, sofern notwendig, die Koordinierung mit anderen, zugeordneten Motor-Ansteuereinheiten der Maschine.

Für die zentrale Überwachung halten sie Ist-Informationen aus dem Steuerbereich der Motor-Ansteuer-Einheit für Kontrollier- oder Koordinierprozesse durch den Leit-Steuerrechner bereit.

Durch diese Rechnerstruktur innerhalb einer komplizierten Maschine lassen sich die komplizierten synchronisierten Bewegungen programmgesteuert in hoher Variabilität ausführen.
Z.B. an Flachkulierwirkmaschinen ist es möglich, die komplizierten Nadelbewegungen oder die Bewegungen anderer am Maschenbildungsprozeß beteiligter Werkzeuge nach komplizierten Bewegungsgesetzen unmittelbar durch die Motor-Ansteuereinheiten ausführen.

Die Zahl der notwendigen mechanischen Elemente zur Modifizierung und Anpassung bestimmter Bewegungen und für die Übertragung dieser Bewegungen auf eine Vielzahl voneinander entfernter Arbeitselemente können entfallen, wenn die komplizierten, und modifizierten Bewegungen unmittelbar durch die elektrischen Stellglieder erzeugt und ausgeführt werden.

Gelingt es, die Motor-Ansteuereinheiten mit ihren intelligenten Steuerungen und ihrem großen Wiederholteilgrad in miniaturisierter Ausführung bei niedrigen Kosten herzustellen, dann reduzieren sich die Aufwendungen für die Maschinen
- auf die Werkzeuge selbst,
- ihre unmittelbare Führung und
- ihren unmittelbar wirkenden Antrieb
- sowie auf die Elemente zur Zuführung der Ausgangsmaterialien,
- die Elemente zur Lagefixierung der Werkstücke während der Bearbeitung und
- deren Abtransport.

Insbesondere für die Koordinierung der Arbeitsweise der Motor-Ansteuereinheiten untereinander ist es zweckmäßig, den BUS-Treiber nach Anspruch 2 auszubilden.

Die Realisierung eines Echt-Zeit-Betriebes im Millisekundenbereich wird gewährleistet durch die Anordnung der Motor-Ansteuereinheiten in unmittelbarer Nähe der Antriebsmotoren gemäß Anspruch 3.

Eine rationelle Nutzung des BUS für Regel- und Koordinierungsvorgänge wird gewährleistet, wenn für Ein- und Ausgang binärer Signale gesonderte Leitungen vorgesehen sind.

Rechenkapazität wird im Bereich der Motor-Ansteuer-Einheit rationeller genutzt, wenn dem BUS-Modul nach Anspruch 5 ein Adressdekoder zugeordnet ist.

Die Zuordnung von Programmen nach Anspruch 6 und 7 gestattet die Anwendung dieser Motor-Ansteuereinheiten auch für extrem komplizierte Steuer- und Regelprozesse.

Die Kombination der durch die Motor-Ansteuereinheiten gesteuerten Motoren mit Abtriebselementen, nach Anspruch 8, gestattet die unmittelbare Übertragung der erzeugten, gesteuerten Bewegung auf rotierende, schwingend bogenförmige, schwingend geradlinige oder endlos geradlinige Bewegungen der Arbeitselemente.

Die Zuordnung dieser Motor-Ansteuereinheiten zu den Fadenführern und den Kulierkurven einer Flachkulierwirkmaschine führt zu einer hohen Leistung dieser Maschine bei geringsten Aufwendungen für die Koordinierung der Bewegungen untereinander.

Die Ansprüche 10 bis 14 zeigen beispielhaft zweckmäßige Anwendungsformen der Motor-Ansteuereinheiten an diesen Maschinen auf.

Mit der Zuordnung dieses Maschinen-Steuersystems zu einem übergeordneten Zellen- oder Leitsteuerungssystem mit den Mitteln nach Anspruch 15 wird die Einordnung auch dieser komplizierten Maschinensteuerungen in umfassendere Prozesse ermöglicht.

Die Erfindung soll nachstehend an einem Ausführungsbeispiel näher erläutert werden. In den dazugehörigen Zeichnungen zeigen:

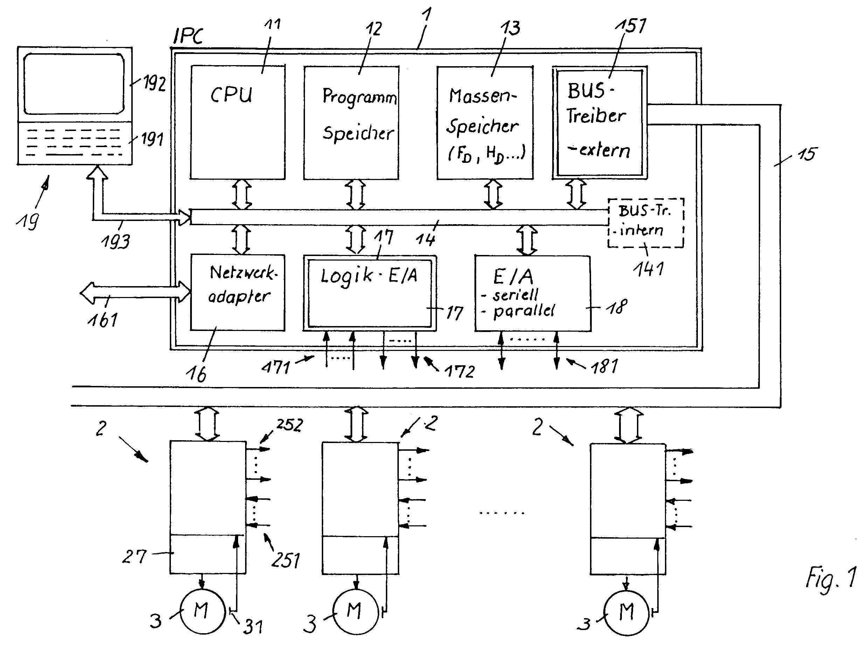

- Fig. 1: eine schematische Gesamtansicht der Steuerung für mehrere Einzelantriebe,

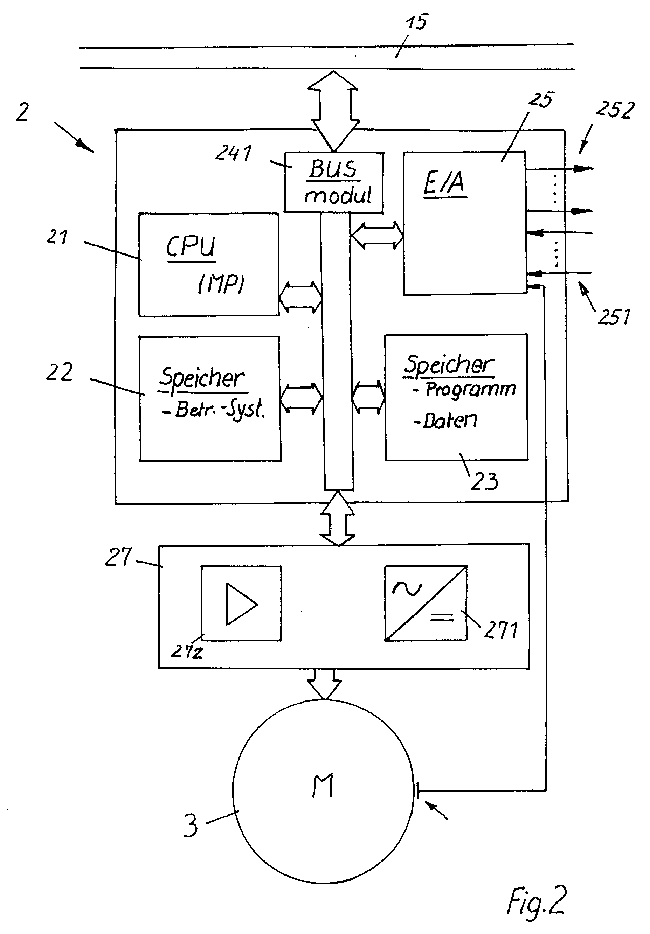

- Fig. 2: eine schematische Darstellung eines Motor-Ansteuersystems,
- Fig. 3: eine schematische Teildarstellung eines Antriebskonzeptes für eine Flachkulierwirkmaschine,
- Fig. 4: ein Antriebsbeispiel für den Deckmaschinenaushub an Flachkulierwirkmaschinen,
- Fig 5 und 6: je eine Antriebsvariante für die Legeschienenansteuerung an einer flachen Wirkmaschine und
- Fig. 7: eine schematische Darstellung der Kettfadenliefervorrichtung einer flachen Kettenwirkmaschine.

Die elektronische Steuereinheit besteht aus einem IPC 1 mit ansich bekannten Baugruppen, einer CPU 11, einem Programmspeicher 12, einem Massenspeicher 13, einer Ein- und Ausgabeeinheit 18 für serielle oder parallele Datenströme, mit einem internen BUS 14 und einem BUS-Treiber 141.

Soll der IPC 1 in ein übergeordnetes System eingeordnet werden, ist in ansich bekannter Weise ein sogenannter Netzwerkadapter 16 mit seinem entsprechenden Anschluß 161 vorzusehen.

Für die Bedienung des IPC 1 ist in ansich bekannter Weise Bedieneinheit 19 mit Tastatur 191 und einem Display 192 vorgesehen.
Laufwerke für externe Speicher, wie Disketten oder CD-ROM sind nicht dargestellt, können aber in ansich bekannter Weise zugeordnet werden.

Dieser, bis hier her beschriebene IPC 1 arbeitet in der Regel mit reiner Wortverarbeitung.
Für eine Steuerungs, die einerseits Regelprozesse für Motoren 3 und andererseits binäre Aus- und Eingänge zu verwalten hat, ist jedoch eine Bit-Verarbeitung unumgänglich.

Bei bisher üblichen Steuerungen wurde deshalb, zusätzlich zu dem IPC 1, der allgemeine Programmierungs- und Kontrollaufgaben hat, ein zusätzlicher Rechner, eine zentrale Steuereinheit für die Steuerungsaufgaben vorgesehen.

Diese zentrale Steuereinheit - die sogenannte SPS oder CNC - übernahm alle Steuerungsaufgaben, die die Maschine betreffen.

Den elektromechanischen Stellgliedern in der Maschine, den Motoren 3, Linearantrieben, Magneten oder Relais wurden Sensoren und entsprechende Leistungsteile zugeordnet.

Ein externer BUS verband Stellglieder und Sensoren im Bereich der Stellglieder mit der zentralen Steuereinheit.

Auf diese Weise wurden die im Bereich der Stellglieder erfaßten Daten in ein Schieberegister gelesen. Diese wurden der zentralen Steuerung zum Errechnen neuer Stellwerte angeboten.
Der BUS führte auch die durch Bearbeiten der Daten ermittelten Befehle der zentralen Steuerung an die Stellglieder weiter. Diese lösten dann eine bestimmte, an den Stellgliedern gespeichere Befehlsfolge für das Abarbeiten aus.

Der Steuer- oder Stellimpuls der zentralen Steuerung wurde dabei im Bereich der Stellglieder entschlüsselt und die ausgewählte Befehlsfolge wurden über entsprechende Leistungsteile (Verstärker) an das Stellglied weitergegeben.

Diese dargestellte Form der Datenverarbeitung, insbesondere die zentralisierte Erarbeitung der Stellsignale führte dazu, daß die Anzahl und die Schwierigkeit der Stellprozesse pro Maschine nicht weiter erhöht werden konnte.

Zur Vermeidung dieser Grenzen schlägt nun die Erfindung vor, den zentralen IPC 1 zusätzlich mit einer Logikeinheit 17 für binäre Ein- und Ausgänge und mit einem zusätzlichen BUS-Treiber 151 für den externen BUS 15 zu versehen.

Dieser BUS-Treiber 151 ist vorzugsweise als schneller serieller Treiber ausgebildet. Zweckmäßig, aber nicht Bedingung, ist in diesem Zusammenhang die Verwendung von Lichtleitern im BUS 15 und entsprechender Wandler im BUS-Treiber 151 und im BUS-Modul 241 an den Stellgliedern (3).

An diesen externen BUS 15 sind sogenannte Motor-Ansteuereinheiten 2, je eines pro Stellglied, angekoppelt.

Das Stellglied ist in diesem Falle vorzugsweise ein rotierender Motor 3 für kontinuierliche Antriebe oder für Positionierungsaufgaben.
Stellglieder können aber auch Linearmotoren oder dergleichen sein. Die weitere Beschreibung erfolgt jedoch anhand der rotierenden Motoren.

Diese Motor-Ansteuereinheiten 2 besitzen einerseits ein informationsverarbeitendes Teil und ein sogenanntes Leistungsteil 27.

Das informationsverarbeitende Teil ist mit einer CPU 21, im einfachsten Fall mit einem Mikroprozessor, ausgestattet.

Es besitzt einen Speicher 22 für ein internes Betriebssystem, einen Speicher 23 für Programme und Daten und eine Ein- und Ausgabeeinheit 25 für binäre Ein- und Ausgänge.
Ein BUS-Modul 241 verbindet den externen BUS 15 mit dem internen BUS 24.
Das Leistungsteil 27 ist verbunden mit dem BUS 24 und mit dem Motor 3.
Sensoren 31, die die Position des Motors 3 und/oder die von ihm erzeugte Drehzahl erfassen, liefern über eine entsprechende Verarbeitungseinheit (Motorfeedback) , nicht dargestellt, Signale an die Ein- und Ausgabebaugruppe 25.
Unter dem Sammelbegriff Sensoren 31 verstehen wir hier analoge oder digitale Meßsysteme, arbeitend nach absoluten, zyklisch absoluten oder inkrementalen Meßverfahren.

Die Orte der möglichen Meßwerterfassung beginnen am ersten, im Motor bewegten Teil, können aber auch an einem von ihm bewegten Teil, bis hin zum Arbeitselement festgelegt werden.

Die Arbeitsweise dieser Steuerung soll im Folgenden prinzipiell beschrieben werden.
Das vom IPC 1 verwaltete Maschinenprogramm enthält die von den einzelnen Antrieben nacheinander zu realisierenden Parameter oder Zielpositionen, stimmt diese aufeinander ab und korrigiert im erforderlichen Fall im Rahmen des Maschinenprogrammes einzelne oder mehrere Sollvorgaben.

Zu diesem Zweck besitzt der IPC 1 die Logikbaugruppe 17 mit binären Ein- und Ausgängen 171,172 für Stellglieder wie Magnete und / oder Relais, die Funktionen der Gesamtmaschine betreffen.

In der Logikbaugruppe 17 werden aber auch sogenannte Regelprogramme ausgeführt, die die einzelnen Parameter der Maschine in ihrer Gesamtheit synchronisieren.
Die Logikbaugruppe 17 stellt über den BUS 14 entsprechende Sollparameter zur Verfügung, die dann über den BUS-Treiber 151 für den externen BUS 15 den Motor-Ansteuereinheiten 2 zur Verfügung gestellt werden.
Die Motor-Ansteuereinheiten 2 entnehmen die ihnen zugedachten Parameter durch einen Adressdekoder in ihrem BUS-Modul 241 aus dem externen BUS 15 und lösen von diesem Zeitpunkt alle Steuer- und Regelaufgaben zur Realisierung dieses Parameters selbständig.
Die Betriebsweise dieses informationsverarbeitenden Teiles der Motor-Ansteuereinheiten 2 ist durch ein dort gespeichertes Betriebssystem realisierbar.
Spezifische Programmbausteine und Daten für die Ausführung von Positionierungs- oder Drehzahlsteuerungsaufgaben oder das Schalten von binär ansteuerbaren Stellgliedern sind vor Ort gespeichert und werden durch die CPU 21 im erforderlichen Umfang aus dem Speicher 23 abgerufen und verarbeitet.
Diese Motor-Ansteuereinheit 2 besitzt auch Programme für die Regelung und die Erarbeitung der daraus resultierenden Stellsignale für den Motor 3 oder das entsprechende Antriebselement.

Zur Feststellung des jeweiligen Ist-Wertes wird das Signal des Sensors 31 der über die Ein- und Ausgabebaugruppe 25 der Zentraleinheit - CPU 21 zugeführt und dient dort sowohl der internen Verarbeitung als auch der Information des übergeordneten IPC 1.

Mit dieser dezentralen Informationsverarbeitung wird es möglich, den externen BUS 15 und den zentralen Rechner -IPC 1 - von einer extremen Menge an Rechenoperationen und Über-tragungsvorgängen zu entlasten.

Diese Anordnung ermöglicht es, den Echt-Zeit-Betrieb in Zeitintervallen zu gewährleisten, die bisher weder durch speicherprogrammierbare Steuerungen noch durch CNC-Steuerungen realisierbar waren.
Der Echt-Zeit-Steuerungsbereich liegt bei den vorgenannten Steuerungen im Bereich von einzelnen Millisekunden und Bruchteilen von ihnen.
Durch diese dezentrale Datenverarbeitung für Regel- und Steuerprogramme, unter der Obhut eines regel- und steuerfähigen Zentralrechners, können beliebig vielenach unterschiedlichen Programmen arbeitende Einzelantriebe in einer Maschine eingesetzt werden.
Auch sehr hochfrequent sich verändernde Bewegungsabläufe können mit einer derartigen Steuerung in praktisch unbegrenzter Zahl realisiert werden.

Besonders deutlich wird die neue Qualität der Maschinensteuerung z. B. an Flachkulierwirkmaschinen. Dort sind neben der Antriebssteuerung für die Kulierkurvenschiene, deren Hub sich programmgemäß verändern muß, neben einer großen Anzahl von Fadenführerschienen (5-16 Schienen), mit unterschiedlichster raumlicher und zeitlicher Lage und Größe der Hübe bei größter Genauigkeit, und einer relativ großen Anzahl von einzeln steuerbaren Deckern, die unterschiedliche Positionen einnehmen, und teilweise im Rhythmus der Maschenbildung bewegbar sein müssen.

Weitere zum Teil recht komplexe Steuerungsaufgaben werden aus dem Antrieb der Hauptwelle, der Fadenzuführung und dem Warenabzug abgeleitet.
Bei der Herstellung von Einzelstücken sind zusätzlich Antriebe für das Bilden eines Doppelrandes, für das Übertragen von Ripprändern auf die Nadeln der Nadelbarre und die Steuerung in die jeweilige Ausgangsposition notwendig.

Jeder Fachmann kann verstehen, daß für die Ausführung dieser Bewegung eine extrem hohe Zahl von Informationen unterschiedlichster Art für die Synchronisierung all dieser Antriebe bei hoher Präzision bezüglich Position und Zeit bereitgestellt werden müssen.

Mit der Zuordnung je einer Motor-Ansteuereinheit 2 zu jedem dieser Antriebe 3, 32, 33 und der Vorgabe der koordinierten Zielparameter durch die IPC 1, erlaubt es, diese Steuerung praktisch zu realisieren, ohne die Maschinenfrequenz zusätzlich zu begrenzen.
Die Maschinendrehzahl wird demnach allein durch die mechanischen Parameter der Maschine begrenzt.

Durch die jetzt vorhandene Möglichkeit, eine sehr große Zahl von Steuervorgängen bei sehr hoher Steuerfrequenz zu realisieren, können Antriebe, die bisher durch Zwischenschaltung mechanischer Koppel- oder Kurbelgetriebe umgewandelt werden mußten, direkt durch den Motor gesteuert werden.
Dabei werden changierende Bewegungen eines Arbeitselementes, vorzugsweise über einen Zahnriementrieb, 32 auf die Arbeitselemente 5,6,7,52 übertragen.

Der mit seinen Zähnen nach außen weisende Zahnriemen wird über zwei Rollen geführt und im Bereich seiner beiden Trums auf der einen Seite durch das Abtriebsrad des Motors 3 und auf der anderen Seite mit einem verzahnten Teil am Arbeitselement 51,61,71,52, gekoppelt.

Auf diese Weise wird die Antriebsdrehzahl des Motors 3 bei Sicherung eines großen Eingriffsbereiches formschlüssig, unabhängig von der Größe des zu übertragenden Hubes, bei geringsten Massenkräften auf das Arbeitselement übertragen.

Die Antriebseinheiten können in standardisierter Form hergestellt und praktisch jedem Arbeitselement einzeln zugeordnet werden.

Man kann auch Maschinen, die nach komplizierten Arbeitsverfahren und Arbeitsschritten arbeiten, mit relativ geringem Teileaufwand herstellen, mit einer hohen Geschwindigkeit betreiben und auf die unterschiedlichsten Programme und Parameter beliebig einstellen.
Der Umstellungsaufwand der Maschine auf andere Parameter kann in vielen Fällen allein durch die Vorlage anderer Programmspeicher verändert werden.

Ein weiteres sehr vorteilhaftes Einsatzgebiet stellt die Kettenwirkmaschine dar. Hier geht es darum, die Legeschienen 72 mit einer sehr hohen Frequenz nach einen mustergemäß vorgegebenen Programm zu steuern. Auch bei diesem Steuerproblem versagten die bisher bekannten Steuerungen, weil sie nicht in der vorgeschiebenen Zeit die vorgegebenen, unterschiedlichen Hubgrößen und die dafür erforderlichen Beschleunigungs- und Verzögerungsprogramme bereitstellen konnten.

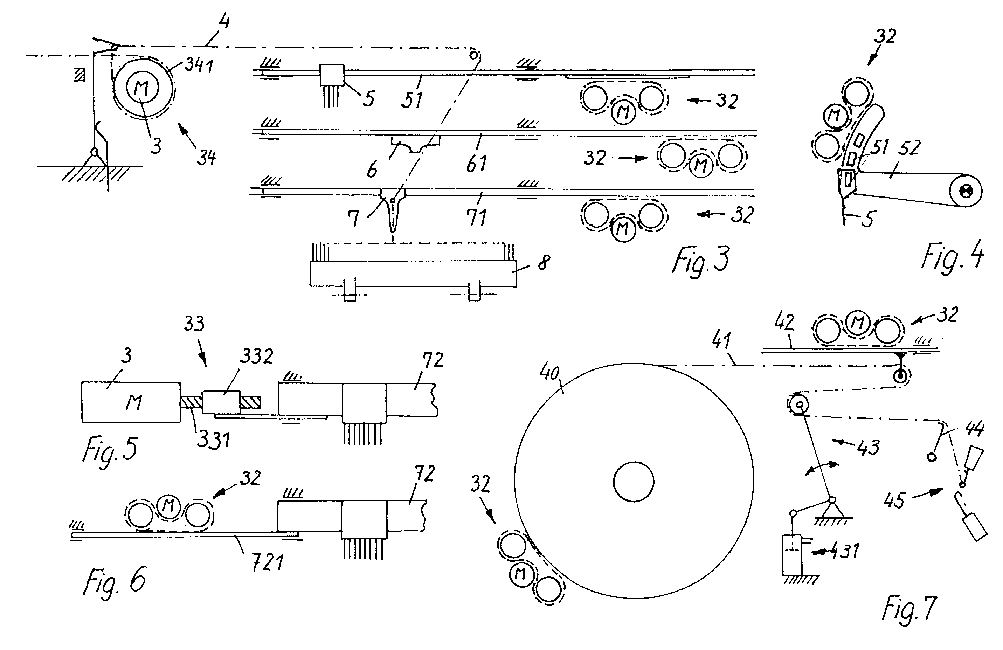

Die in den Fig. 5 und 6 dargestellten Anlenkungsmöglichkeiten der Motoren 3 sind praktisch gleichwertig, wobei der Antriebseinheit 32 mit dem Zahnriemen der Vorzug zu geben ist.

Die Ausführung nach Fig. 5, die eine Antriebseinheit, bestehend aus Motor 3, Spindel 331 und Mutter 332 besitzt, ist für den Versatz von Legeschienen 72 geeignet, wenn man die Spindel 331 einerseits und die Mutter 332 mit sehr kleinen Massen und Reibungswerten herstellen kann.

Die Legeschienen 72 sollten für die Anwendung derartiger Antriebe als Hohlprofile ausgeführt sein, die bei einer hohen Steifigkeit eine geringe Eigenmasse besitzen.
Als eine weitere Anwendungsform der eingangs genannten Steuerung wird ein Kettablaßgetriebe, - z. B. für eine Kettenwirkmaschine - beschieben, bei der einerseits der Kettbaum direkt angetrieben wird, und bei der im Fadenlauf zusätzliche mechanische Zwischenspeicher vorgesehen sind, um die hohen Beschleunigungs- und Verzögerungswerte für den schweren Kettbaum zu reduzieren.
Bei einer derartigen Steuerung können Antriebseinheiten 32 sowohl für den Kettbaum 40 direkt als auch für den Zwischenspeicher 42 für Fadenscharen 41 vorgesehen werden.

Die Motor-Ansteuereinheiten 2 beider Antriebseinheiten können in diesem Falle direkt nach vorgegebenen Programmen miteinander kommunizieren und so bei niedrigstem Energieaufwand eine konstante Fadenlänge pro Zeiteinheit bei konstanter Spannung der Fadenschar 41 vor den Maschenbildungselementen 45 realisieren.

Ein breites Anwendungsgebiet ist auch an Werkzeugmaschinen erkennbar. Die koordinierte Antriebsbewegung mehrerer Achsen für Werkstück und Werkzeug mit der erfindungsgemäßen Steuerung in einfacher und präziser Weise realisieren.

Die Erfindung ist unter anderem auch mit Vorteilen einsetzbar bei der Steuerung der Arbeitsdrehzahlen der Kardierelemente an Deckelkarden und an, nach komplizierten Gesetzen und mit hoher Präzision arbeitenden anderen Textilmaschinen, Verarbeitungsmaschinen, Bearbeitungsmaschinen oder Werkzeugmaschinen, gleich welcher Art.

### Aufstellung der verwendeten Bezugszeichen

- 1: IPC - Industriepersonalcomputer
- 11: CPU
- 12: Programmspeicher
- 13: Massenspeicher
- 14: BUS-intern
- 141: BUS-Treiber, intern
- 15: BUS-extern
- 151: BUS-Treiber, extern
- 16: Netzwerkadapter
- 161: - Anschluß
- 17: Logik E/A
- 171: - Eingänge, binär
- 172: - Ausgänge, binär
- 18: E/A, seriell/parallel
- 181: - Eingänge/Ausgänge, seriell, parallel
- 19: Bedientableau
- 191: Tastatur
- 192: Display
- 193: Standard E/A
- 2: Motor-Ansteuereinheit (MAS)
- 21: CPU (auch Mikroprozessor)
- 22: Speicher, Betriebssystem
- 23: Speicher, Programm, Daten
- 24: BUS
- 241: BUS-Modul
- 25: E/A, binär
- 251: - Eingänge, binär
- 252: - Ausgänge, binär
- 27: Leistungsteil
- 271: Stromwandler
- 272: Verstärker
- 3: Motor
- 31: Sensor
- 32: Antriebseinheit, linear, Zahnriemen
- 33: Antriebseinheit
- 331: Spindel
- 332: Mutter
- 34: Antriebseinheit, rotierend
- 341: Förderwalze
- 4: Faden
- 40: Kettbaum
- 41: Fadenschar
- 42: Steuerschiene
- 43: Fadenzwischenspeicher
- 431: Gaskolben
- 44: Fadenwippe
- 45: Maschenbildungsstelle
- 5: Decker
- 51: Deckerschiene (Deckerversatzantrieb)
- 52: Deckerarm (Deckerhubantrieb)
- 6: Kulierkurve
- 61: Kulierkurvenschiene
- 7: Fadenführer
- 71: Fadenführerschiene
- 72: Legeschiene
- 8: Nadelbarre

## Patentansprüche

1. Elektronische Steuereinheit für Maschinen mit durch hochdynamisch arbeitende Stellglieder (3) synchronisiert geteuerten Bewegungsabläufen mehrerer unmittelbar zusammenwirkender Funktionselemente, bestehend
aus einem Industrie-Personal-Computer (IPC,1)
- mit mindestens einer Ein- und Ausgabeeinheit (18) für serielle und parallele Datenströme,
- mit einem externen BUS (15) zur Verbindung des IPC mit den Stellgliedern (2) und
aus mindestens zwei, Stellgliedern (3) der Maschine zugeordneten Motor-Ansteuereinheiten (2),
- mit Befehlsspeichern,
- mit Sensoren an den von den Stellgliedern bewegten Elementen,
- mit Mitteln zur Rückmeldung von IST-Daten an den IPC
- mit logischen Befehlsausgabeschaltungen (17) und
- mit einem Leistungsteil (27),
**dadurch gekennzeichnet**,
daß der IPC (1) als Leitsteuerrechner ausgebildet und programmierbar ist und
daß die Motor-Ansteuereinheiten als komplette Maschinensteuerrechner ausgebildet sind und mindestens enthalten:
- je eine CPU (21),
- einen Speicher (22) für ein internes Betriebssystem,
- einen Speicher (23) für Steuer- und Regelprogramme,
- einen internen BUS-Modul (241),
- mindestens eine Ein- und Ausgabeeinheit (25) mit mindestens einem Eingang von Sensoren (31) an, vom Motor (3) angetriebenen Elementen und
- mindestens einen, mit dem externen BUS (15) verbundenen Speicher (23) für IST-Informationen aus dem Steuerbereich der Motor-Ansteuereinheit (2).

2. Elektronische Steuereinheit nach Anspruch 1, dadurch gekennzeichnet,
daß dem externen BUS (15) ein zusätzlicher BUS-Treiber (151) zugeordnet ist, der als schneller, serieller BUS-Treiber ausgebildet ist.

3. Elektronische Steuereinheit nach einem der Ansprüche 1 bis 2, dadurch gekennzeichnet,
daß die Motor-Ansteuereinheiten (2) dezentral, in unmittelbarer Nähe der Motoren (3) angeordnet sind.

4. Elektronische Steuereinheit nach einem der Ansprüche 1 bis 3, dadurch gekennzeichnet,
daß die Motor-Ansteuereinheit (2) mit Programmen für eine interne Regelung ausgestattet sind und die Ein- und Ausgabe-Einheit (25) Ein- und Ausgänge (251,252) für binäre Signale besitzt.

5. Elektronische Steuereinheit nach einem der Ansprüche 1 bis 4, dadurch gekennzeichnet,
daß das BUS-System (24) der Motor-Ansteuereinheit (2) mit einem BUS-Modul (241) versehen ist, in den ein Adress-Dekoder integriert ist.

6. Elektronische Steuereinheit nach einem der Ansprüche 1 bis 5, dadurch gekennzeichnet,
daß die Motor-Ansteuereinheiten (2) Programme für die Steuerung und / oder Regelung von Bahndaten und Positionen der Funktionselemente enthalten.

7. Elektronische Steuereinheit nach einem der Ansprüche 1 bis 6, dadurch gekennzeichnet,
daß die Motor-Ansteuereinheiten (2) Programme für die Steuerung und/oder Regelung von Drehzahlen der Funktionselemente besitzen.

8. Elektronische Steuereinheit nach einem der Ansprüche 1 bis 7, dadurch gekennzeichnet,
daß den Motoren (3) Zahnriemenantriebseinheiten (32) zugeordnet sind,
- dessen Zahnriemen außen liegende Zähne haben und - denen jeweils
- - im Bereich eines ersten Trumes das Abtriebsrad des Motors (3) und
- - im Bereich eines zweiten Trums ein verzahntes Teil des anzutreibenden Elementes (51,61,71,52,271, 40,42) zugeordnet sind.

9. Elektronische Steuereinheit nach einem der Ansprüche 1 bis 8, dadurch gekennzeichnet,
daß Motor-Ansteuereinheiten (2) den Fadenführern (7) und den Kulierkurven (6), einer Flachkulierwirkmaschine zugeordnet sind.

10. Elektronische Steuereinheit nach einem der Ansprüche 1 bis 8, dadurch gekennzeichnet,
daß Motor-Ansteuereinheiten (2) dem Deckerversatz-(51) und dem Deckerhubantrieb (52) einer Flachkulierwirkmaschine zugeordnet sind.

11. Elektronische Steuereinheit nach einem der Ansprüche 1 bis 8, dadurch gekennzeichnet,
daß die Motor-Ansteuereinheit (2) auch den Fadenliefervorrichtungen (34) an Flachkulierwirkmaschinen zugeordnet sind.

12. Elektronische Steuereinheit nach einem der Ansprüche 1 bis 8, dadurch gekennzeichnet,
daß die Motor-Ansteuereinheit (2) auch den Gewirkeabzugsvorrichtungen an Flachkulierwirkmaschinen zugeordnet sind.

13. Elektronische Steuereinheit nach einem der Ansprüche 1 bis 8, dadurch gekennzeichnet,
daß die Motor-Ansteuereinheit (2) den Versatzvorrichtungen für Kettfadenlegeschienen (72) an Kettenwirkmaschinen zugeordnet sind.

14. Elektronische Steuereinheit nach einem der Ansprüche 1 bis 8, dadurch gekennzeichnet,
daß die Motor-Ansteuereinheit (2) auch einem Zahnriemen-Antriebssystem (32) im Umfangsbereich eines Kettbaumes (40) zugeordnet ist und daß mindestens eine Seitenscheibe des Kettbaumes an ihrem Umfang Zähne für das Zusammenwirkan mit dem Zahnriemen besitzt.

15. Elektronische Steuereinheit nach Anspruch 1 bis 14, dadurch gekennzeichnet, daß der IPC (1) zusätzlich mit einem Netzwerkadapter (16) zum Anschluß an andere Leit- oder Zellensteuerrechnersysteme versehen ist.
